# EUROPÄISCHE PATENTSCHRIFT

(11) **EP 0 809 670 B1**
(45) Veröffentlichungstag und Bekanntmachung des Hinweises auf die Patenterteilung: **26.04.2000**
(21) Anmeldenummer: 96901781.3
(22) Anmeldetag: 03.02.1996
(51) Int. Cl.: C08J 7/12

(54) **MEHRSCHICHTIGER, FLUORHALTIGER POLYMERER STOFF**
MULTI-LAYER FLUORINE-CONTAINING POLYMER MATERIAL
MATERIAU POLYMERE MULTICOUCHE RENFERMANT DU FLUOR

(30) Priorität: 16.02.1995 DE 19505188
(43) Veröffentlichungstag der Anmeldung: 03.12.1997
(73) Patentinhaber: BASF AKTIENGESELLSCHAFT, 67056 Ludwigshafen (DE)
(72) Erfinder: BÜSCHGES, Ulrich, D-67157 Wachenheim (DE); ZEMVA, Boris, 61111 Ljubljana (SI); KAREL, Lutar, 61234 Menges (SI)
(86) Internationale Anmeldenummer: EP9600455
(87) Internationale Veröffentlichungsnummer: WO9625454

(56) Entgegenhaltungen:
- EP-A- 0 611 791
- DD-A- 280 772
- DE-A- 2 738 382
- DE-A- 4 341 671
- DATABASE WPI Derwent Publications Ltd., London, GB; AN 88-297042[42] XP002010459 & JP,A,63 218 064 (TOXO SODA MFG KK) , 12.September 1988
- DATABASE WPI Derwent Publications Ltd., London, GB; AN 94-315019[39] XP002010460 & SU,A,1 816 773 (NAZAROV V.G.) , 23.Mai 1993
- DATABASE WPI Derwent Publications Ltd., London, GB; AN 87-181844[26] XP002010461 & JP,A,62 111 739 (KURARAY KK) , 22.Mai 1987

## Beschreibung

Die vorliegende Erfindung betrifft einen aus mindestens zwei Schichten bestehenden polymeren Stoff aus mindestens einer fluorhaltigen Schicht und mindestens einer nicht-fluorhaltigen Schicht, wobei die fluorhaltige Schicht
4 bis 100 µm dick ist,
0,1 bis 0,76 g Fluor/g der fluorhaltigen Schicht enthält und mit 448 µg Fluor/cm² bis 50 mg Fluor/ cm² belegt ist.

Die Fluorierung von unterschiedlichen Gegenständen zur Erzeugung einer fluorhaltigen Schicht auf diesen Gegenständen ist bekannt. Die fluorhaltige Schicht dieser Formkörper und Folien hat in vielen Fällen eine gewisse Sperrwirkung gegenüber dem Durchdringen von flüchtigen Stoffen.

Zum Beispiel werden zur Verhinderung der Permeation von Kraftstoffen durch Kunststoff-Tankwände, die Kunststoffkraftstofftanks fluoriert.

Die DE-C 36 40 975, DE-C 26 44 508, DE-C 35 23 137, DE-C 42 12 969, DE-A 36 40 975, DE-B 19 05 094, DE-C 24 01 948 und US 2,811,468 beschreiben die Fluorierung von polymeren Formkörpern, Folien und anderen Gegenständen.

Die hierzu eingesetzten Verfahren sind jedoch nicht zufriedenstellend und die Sperrwirkung der fluorierten Schichten lassen zu wünschen übrig.

In DD-A-280 772 werden durch Oberflächenfluorierung erhältliche polymere Stoffe mit mindestens 100 µg/cm² Fluor beschrieben. Die Permeabilität dieser Stoffe für Kraftstoffe lässt jedoch noch zu wünschen übrig.

Aus EP-A-0 611 791 wird ein mehrstufiges Verfahren zur Oberflächenfluorierung von polymeren Stoffen beschrieben, wobei jedoch keine konkreten Druck- und Temperaturbereiche offenbart werden.

Die DE-B 19 05 094 beschreibt Vorratsbehälter für Treibstoff, deren Behälterwand eine Fluorbelegung von 0,01 bis 30 µg Fluor/cm² Wand hat.

Die bereits zitierte US 2,811,468 beschreibt eine fluorierte Polyethylen-Folie deren Fluorgehalt so hoch ist, daß sie praktisch undurchlässig für atmosphärische Gase ist, aber deren Fluorgehalt 3,5 Gew.-% nicht überschreitet.

Die Barrierewirkung der, in der eingangs zitierten Literatur, beschriebenen fluorierten Gegenstände gegenüber organischen chemischen Verbindungen, läßt jedoch zu wünschen übrig.

Der gegenwärtige Kenntnisstand läßt vermuten, daß die chemische Struktur, der durch Fluorierung erhaltenen Oberflächenschicht entscheidend die Durchlässigkeit (Permeabilität) dieser Schicht oder mit anderen Worten deren Sperrwirkung gegenüber relativ kleinen Molekülen determiniert. Es ist jedoch andererseits nicht voraussagbar oder gar planbar mit welchen Methoden genau die adäquate oder optimale Qualität der Sperrschicht erhalten werden kann.

Der Erfindung lag daher die Aufgabe zugrunde, den geschilderten Mängeln abzuhelfen, besonders sollte die Permeabilität der fluorhaltigen polymeren Stoffe für relativ kleine Moleküle herabgesetzt werden.

Demgemäß wurden die eingangs definierten polymeren Stoffe gefunden. Außerdem wurde ein Verfahren zur Herstellung der erfindungsgemäßen polymeren Stoffe, die Verwendung der erfindungsgemäßen polymeren Stoffe als Permeationsbarriere, die Verwendung der erfindungsgemäßen Stoffe zur Herstellung von Folien, Fasern und Formkörpern, sowie die Folien, Fasern und Formkörper aus den erfindungsgemäßen polymeren Stoffen gefunden.

Die schichtförmig aufgebauten erfindungsgemäßen fluorhaltigen polymeren Stoffe werden nach dem erfindungsgemäßen Verfahren durch die Fluorierung von Polymeren erhalten.

Hierzu geeignete Polymere sind im allgemeinen solche, die unter den erfindungsgemäßen Bedingungen mit dem Fluorierungsmittel nicht vollständig degradativ reagieren. Nicht vollständig degradativ im Sinne der vorliegenden Erfindung bedeutet, daß das Polymere durch den Fluorierungsvorgang nicht zerstört wird, beispielsweise durch Zersetzung in unbrauchbare Bruchstücke.

Geeignete Polymere besitzen im allgemeinen Kohlenstoff-Wasserstoffbindungen, die während des Fluorierungsverfahrens komplett oder teilweise durch Kohlenstoff-Fluorbindungen ersetzt werden können.

Als Beispiele derartiger Polymerer kommen alle thermoplastisch verarbeitbaren Kunststoffe in Frage, wie beispielsweise Polyester, Polyether, Polyetherketone, Polyamide, Polystyrole, Polyolefine.

Besonders geeignet sind Polyolefine, wie beispielsweise Homopolymerisate des Propylens, Copolymerisate des Propylens mit C₂- bis C₄-α-Olefinen, Homopolymerisate des Ethylens, Copolymerisate des Ethylens mit C₃- bis C₈-α-Olefinen oder α-β-ungesättigten Carbonsäuren oder deren Derivate. Vorzugsweise verwendet man Ethylenpolymerisate des Dichtebereichs von 0.890 bis 0,968 g/cm³ und insbesondere HDPE des Dichtebereichs von 0,940 bis 0,962 g/cm³.

Derartige Polyolefine werden mit den bekannten Polymerisationsverfahren hergestellt. Dies sind zum Beispiel die Niederdruckpolymerisatinsverfahren unter Verwendung von Ziegler-, Phillips- oder Metallocenkatalysatorsystemen und die Hochdruckpolymerisation, die im allgemeinen radikalisch initiiert wird.

Geeignete Fluorierungsmittel im Sinne der vorliegenden Erfindung sind solche Reinstoffe oder Gemische, welche unter den erfindungsgemäßen Fluorierungsbedingungen mit dem Ausgangspolymeren nicht vollständig degradativ reagieren.

Als Reinstoffe kommen in Frage elementares Fluor, Halogenfluoride wie z. B. Chlorfluorid, Chlortrifluorid, Bromfluorid, Stickstoffluoride wie z. B. Stickstofftrifluorid, Stickstoffoxyfluorid (NOF), Stickstoffdioxyfluorid, Arsentrifluorid, Arsenpentafluorid, Antimonpentafluorid, Schwefeltetrafluorid, Siliziumtetrafluorid, Bortrifluorid, Bortrifluoridetherat, Hydrogentetrafluoroborat, Edelgasfluoride wie z. B. XeF₂ oder XeF₄ sowie ihre Additionprodukte mit HF.

Man verwendet jedoch auch Gemische von Fluorgas oder einem der anderen Fluorierungsmittel mit einem oder mehreren gegenüber Fluorgas bzw. den Fluorierungsmitteln unter den Fluorierungsbedingungen inerten, Verdünnungsgas(en). Als Verdünnungsgase verwendet man im allgemeinen die leichten Edelgase Helium, Neon, Argon, sowie Stickstoff. Vorzugsweise verwendet man Stickstoff als inertes Verdünnungsgas.

Bevorzugte Gasgemische Fluor/Inertgas(e) enthalten das Fluorgas in einer Menge von 0,1 bis 99,5 Vol-%, vorzugsweise von 1 bis 99 Vol.-% bezogen auf das Gasgemisch. Die Verdünnungsgase liegen dann in einer zu 100 Vol.-% komplementären Menge vor. Ihr mengenmäßiges Verhältnis ist nicht kritisch.

Die Fluorierung des als Ausgangsstoff dienenden Polymeren wird in mehreren Stufen durchgeführt. Dieses Verfahren kann sowohl für bereits erkaltete Polymere angewendet werden, als auch für Polymere, deren Temperatur im allgemeinen in der Nähe des Kristallitschmelzpunkts oder Erweichungspunkts liegt.

An die Reaktionsräume zur Herstellung des erfindungsgemäßen polymeren Stoffs werden keine, über die üblichen Anforderung der Fluorierungstechnologie herausgehenden, besonderen Anforderungen gestellt, außer daß sie gegenüber den Fluorierungsmitteln weitgehend resistent sind und Druckbelastungen im vorher genannten Arbeitsbereich standhalten. Weitgehend resistent bedeutet hier, daß sie bei erfindungsgemäßer Nutzung von den Fluorierungsmitteln nicht zerstörerisch angegriffen werden.

In der ersten Stufe des Fluorierungsverfahrens wird der Umgebungsdruck P1 des zu fluorierenden Polymeren, in Abwesenheit des Fluorierungsmittels, in der Reaktionskammer auf 0,001 bis 0,5 kPA vorzugsweise 0,01 bis 0,1 kPa, im allgemeinen mit Hilfe einer Vakuumpumpe, abgesenkt.

Dies geschieht im allgemeinen bei Reaktionstemperaturen im Bereich von 20 bis 200 °C, vorzugsweise im Bereich von 20 bis 80 °C. Der Druck P1 wird im allgemeinen 1 bis 60 min lang aufrecht erhalten.

Hierauf wird in einer zweiten Stufe der Druck P2 in der Reaktionskammer mit Hilfe eines Fluorierungsmittels, vorzugsweise elementares Fluor oder ein fluorhaltiges Gas, auf 0,1 bis 300 kPa, vorzugsweise 1 bis 300 kPa erhöht.

Hierbei liegt die Temperatur im allgemeinen im Bereich von 20 bis 200 °C, vorzugsweise 20 bis 80 °C und der Druck P2 wird im allgemeinen 10 bis 300 min aufrecht erhalten. Die Fluorkonzentration des fluorhaltigen Gases liegt im Bereich von 0,1 bis 99 Vol.-%, vorzugsweise im Bereich von 1 bis 99 Vol.-%.

Im allgemeinen wird dann der Druck in der Fluorierungskammer auf 0,01 bis 1 kPa abgesenkt.

Danach wird in einer dritten Stufe der Druck P3 in der Reaktionskammer mit Hilfe eines Fluorierungsmittels, vorzugsweise elementares Fluor oder ein fluorhaltiges Gas auf 0,1 bis 300 kPa, vorzugsweise 10 bis 300 kPa eingestellt. Hierbei liegt die Temperatur im allgemeinen im Bereich von 20 bis 200 °C, vorzugsweise 20 bis 80 °C und die Druckbedingung P3 wird im allgemeinen 5 bis 300 min aufrecht erhalten.

Die Fluorkonzentration des fluorhaltigen Gases liegt im Bereich von 0,1 bis 99 Vol.-%, vorzugsweise im Bereich von 1 bis 99 Vol.%.

Im allgemeinen wird dann der Druck in der Fluorierungskammer auf 0,01 bis 1 kPa abgesenkt.

Danach wird in einer vierten Stufe der Druck P4 in der Reaktionskammer mit Hilfe eines Fluorierungsmittels, vorzugsweise elementares Fluor oder ein fluorhaltiges Gas auf 0,1 bis 1000 kPa, vorzugsweise 10 bis 800 kPa eingestellt. Hierbei liegt die Temperatur im allgemeinen im Bereich von 20 bis 200 °C, vorzugsweise 20 bis 80 °C und die Druckbedingung P4 wird im allgemeinen 0,5 bis 200 h aufrecht erhalten, vorzugsweise 0,5 bis 100 h insbesondere 0,5 bis 50 h.

Die Fluorkonzentration des fluorhaltigen Gases liegt im Bereich von 0,1 bis 100 Vol.-%, vorzugsweise im Bereich von 1 bis 100 Vol.%.

Danach wird der fluorierte polymere Stoff der Reaktionskammer entnommen.

Der fluorierte polymere Stoff enthält im allgemeinen eine relativ dünne fluorhaltige Schicht und eine dickere Schicht des Basispolymeren. Diese beiden Schichten sind in der Regel mit den üblichen, physikalischen Trennungsverfahren, wie beispielsweise Extraktion mit Lösungsmitteln, Abziehen etc. nicht voneinander trennbar.

Die Fluorbelegung der fluorhaltigen Schicht liegt im Bereich von 448 µg Fluor/cm² bis 50 mg Fluor/cm²; sie wurde durch Aufschluß des Polymeren nach Wickbold und anschließende Bestimmung des Fluorids mit der ionensensitiven Elektrode bestimmt (F. Ehrenberger, Quantitative Organische Elemtaranalyse, VCH-Verlag (1991) S. 649 ff und S. 424 ff (Aufschluß)).

Die Dicke der fluorierten Schicht wurde mit der Methode der Transmissionselektronenmikroskopie bestimmt und liegt im Bereich von 4 bis 100 µm.

Die Menge chemisch gebundenen Fluors bezogen auf die fluorhaltige Schicht des mehrschichtigen polymeren Stoffs, bestimmt mit der Methode der ESCA-Spektroskopie, beträgt 0,1 bis 0,76 g Fluor/ g der fluorhaltigen Schicht, vorzugsweise 0,4 bis 0,76 g Fluor/g der fluorhaltigen Schicht.

Der erfindungsgemäße polymere Stoff zeichnet sich besonders durch seine Sperrwirkung gegenüber kleinen Molekülen aus, die mit der Permeationsmethode in Anlehnung an ECE 34, Anhang 5 an Hohlkörpern (Volumen 0,3 bis 30 l) bestimmt wurde.

Hierbei wird der zu prüfende Behälter zu 50 % mit Kraftstoff gefüllt, dicht verschlossen und bei 40 °C Umgebungstemperatur vier Wochen vorgelagert, entleert, erneut zu 50 % befüllt und weitere acht Wochen gelagert. Die Permeation wird durch Gewichtsverlust der gefüllten Behälter ermittelt.

Die kleinen Moleküle haben im allgemeinen eine Molmasse im Bereich von 16 bis 1000 g/mol, vorzugsweise 25 bis 500 g/mol und insbesondere 30 bis 250 g/mol.

Die chemische Natur dieser Moleküle ist im allgemeinen nicht kritisch, jedoch tritt die Sperrwirkung des erfindungsgemäßen polymeren Stoffs besonders deutlich gegenüber organischen Molekülen, wie beispielsweise aliphatischen und aromatischen Kohlenwasserstoffen, Alkoholen, Ethern, Ketonen und dergleichen zutage.

Besonders vorteilhaft läßt sich der erfindungsgemäße polymere Stoff als Sperrschicht für kohlenwasserstoffhaltige Mischungen mit einem Kohlenwasserstoffanteil von 5 bis 100 Gew.-%, vorzugsweise 10 bis 100 Gew.% verwenden.

Der zu 100 Gew.-% komplementäre Anteil wird im allgemeinen von anderen organischen Stoffen gebildet, vorzugsweise von Alkoholen und Ethern.

Als Kohlenwasserstoffe kommen Aliphaten wie Methan, Ethan, Propan, Butan, Pentan, Hexan, Heptan, Octan und ihre Isomeren, vorzugsweise die Raffineriefraktion zur Herstellung von Kraftstoffen, in Betracht.

Weiterhin sind als Aromaten Benzol, Toluol, Ethylbenzol, Xylole zu nennen, vorzugsweise die Aromatenfraktion, welche bei der Herstellung von Kraftstoffen anfällt.

Als Alkohole kommen C₁- bis C₅-Alkanole wie Methanol, Ethanol, 1-Propanol, 2-Propanol, 1-Butanol, 2-Butanol, tert.-Butanol, n-Amylalkohol, i-Amylalkohol, vorzugsweise C₁- bis C₄-Alkohole und insbesondere Methanol und Ethanol in Betracht.

Als Ether kommen symmetrische oder unsymmetrische C₁- bis C₅-Dialkyl-Ether in Frage. Solche Ether sind beispielsweise Dimethylether, Diethylether, tert.Butyl-Methylether, tert.Butylethylether und tert.-Amylmethylether.

Ganz besonders vorteilhaft wirkt der erfindungsgemäße polymere Stoff als Sperrschicht für die üblichen Kraftstoffmischungen zum Betrieb von Kraftfahrzeugen wie Otto-Kraftstoff, Dieselkraftstoff, sowie aber auch für Heizöl.

Hervorgehoben sei, daß insbesondere die Permeation von alkoholhaltigen Kraftstoffen stark reduziert wird.

Der erfindungsgemäße polymere Stoff kann zur Herstellung von Folien, Fasern und Formkörpern aller Art verwendet werden.

Vorzugsweise kann der erfindungsgemäße polymere Stoff zur Herstellung von Vorratsbehältern wie beispielsweise Beuteln, Kanistern, Tanks, Containern verwendet werden. Insbesondere kann der erfindungsgemäße Stoff zur Herstellung von Kunststoffkraftstoffbehältern für Kraftfahrzeuge aller Art, wie beispielsweise Personenkraftwagen, Motorräder, Busse und Lastkraftwagen verwendet werden, sowie auch vorteilhaft für Heizöltanks und Industrial Bulk Container.

Die Fasern, Folien und Formkörper aus dem erfindungsgemäßen polymeren Stoff können nach den dem Fachmann bekannten Verfahren, wie beispielsweise der Extrusion, hergestellt werden.

Hierzu können verschiedene Methoden angewendet werden. Die zu fluorierenden Polymeren können praktisch als Reinstoffe in bereits geformtem Zustand, beispielsweise als Folie oder Hohlkörper oder dergleichen vorliegen und werden dann fluoriert ("off-line"-Methode). Andererseits können die zu fluorierenden Polymere während des Formvorgangs fluoriert werden ("in-line"-Methode).

Es ist weiterhin möglich von vorneherein geformte, mehrschichtige Polymermassen zur Fluorierung zu verwenden, mehrschichtige Folien oder Formkörper während des Formvorgangs zu fluorieren oder aber die erfindungsgemäßen polymeren Stoffe als Bestandteil eines Mehrschichtverbundes (Laminat) zu verwenden.

### Beispiele

In einer evakuierbaren Reaktionskammer wurden Flaschen aus HDPE (Lupolen® 4261 A) mit einem Volumen von 300 ml unter den in Tabelle 1 angegebenen Versuchsbedingungen fluoriert, wobei die erste Stufe ohne das Beisein des Fluorierungsmittels durchgeführt wurde.

Die Flaschen wurden dann im sogenannten Permeations-Test analog ECE 34, Anhang 5 auf ihre Sperrwirkung gegenüber dem Testkraftstoff mit dem Namen Haltermann CEC-RF-08-A-85 (M0) und der FAM-Prüfflüsigkeit DIN 51604-B getestet. Die Testresultate sind in Tabelle 2 zusammengestellt. Es wurden Vergleichsmessungen mit unbehandelten Flaschen aus Lupolen® 4261 A als Referenz durchgeführt.

**Tabelle 1:**

| Verfahrensbedingungen der Fluorierung | | | | |
|---|---|---|---|---|
| Serie | 1 | 2 | 3 | 4 |
| P₁ [kPa] | 0,01 | 0,01 | 0,01 | 0,01 |
| T [°C] | 25 | 25 | 25 | 50 |
| t [min] | 15 | 15 | 15 | 5 |
| P₂ [kPa] | 160 | 160 | 160 | 160 |
| F₂/N₂ [Vol.-%] | 10/90 | 10/90 | 20/80 | 10/90 |
| T [°C] | 25 | 25 | 25 | 25 |
| t [min] | 90 | 90 | 90 | 90 |
| P₃ [kPa] | 113 | 113 | 113 | 113 |
| F₂/N₂ [Vol.-%] | 50/50 | 50/50 | 50/50 | 30/70 |
| T [°C] | 25 | 25 | 25 | 25 |
| t [min] | 90 | 90 | 90 | 90 |
| P₄ [kPa] | 160 | 160 | 160 | 590 |
| F₂/N₂ [Vol.-%] | 100/0 | 50/50 | 100/0 | 50/50 |
| T [°C] | 25 | 45 | 25 | 25 |
| t [h] | 41 | 20 | 4 | 5 |

**Tabelle 2:**

| Permeationseigenschaften der Sperrschicht | | | | |
|---|---|---|---|---|
| Serie | 1 | 2 | 3 | 4 |
| Schichtdicke Fluorpolymer [µm] | 8 | 6 | 4 | 10 |
| F-Belegung [µgF/cm²] | 1016 | 710 | 448 | 1006 |
| Reduktion der Permeation im Vergleich zur unbehandelten Flasche [%] | | | | |
| M0 | | | | |
| FAM-B | 99,8 | 99,8 | 99,8 | 99,9 |
| | 98,5 | 97,1 | 98,5 | 98,1 |

## Patentansprüche

1. Aus mindestens zwei Schichten bestehender, durch Fluorierung erhältlicher polymerer Stoff aus mindestens einer fluorhaltigen Schicht und mindestens einer nicht-fluorhaltigen Schicht, wobei die fluorhaltige Schicht
4 bis 100 µm dick ist,
0,1 bis 0,76 g Fluor/g der fluorhaltigen Schicht enthält und mit
448 µg Fluor/cm² bis 50 mg Fluor/cm² belegt ist.

2. Aus mindestens zwei Schichten bestehender polymerer Stoff nach Anspruch 1, dadurch gekennzeichnet, daß die nicht-fluorhaltige Schicht ein Polyolefin enthält.

3. Aus mindestens zwei Schichten bestehender polymerer Stoff nach den Ansprüchen 1 oder 2, dadurch gekennzeichnet, daß die nicht-fluorhaltige Schicht ein Ethylenpolymer enthält.

4. Verfahren zur Herstellung eines mehrschichtigen, mindestens eine fluorhaltige Schicht enthaltenden polymeren Stoffes gemäß den Ansprüchen 1 bis 3, durch Fluorierung eines Polymeren, dadurch gekennzeichnet, daß man zuerst den Umgebungsdruck des Polymeren auf einem Druck P1 von 0,001 bis 0,5 kPa reduziert, dann in einer zweiten Stufe mit einem fluorhaltigen Gas bei einem Druck P2 von 1 bis 300 kPa, dann in einer dritten Stufe mit einem fluorhaltigen Gas bei einem Druck P3 von 10 bis 300 kPa und schließlich in einer vierten Stufe bei einem Druck P4 von 10 bis 800 kPa fluoriert, wobei P1 geringer ist als P2, P3 und P4 und wobei die Temperatur bei der Fluorierung zwischen 20 und 80°C liegt.

5. Verfahren nach Anspruch 4, dadurch gekennzeichnet, daß die Temperatur bei der Fluorierung zwischen 25 und 45°C liegt.

6. Verwendung des polymeren Stoffes gemäß den Ansprüchen 1 bis 3 als permeationsverhindernde Sperre für kleine Moleküle.

7. Verwendung des polymeren Stoffes gemäß den Ansprüchen 1 bis 3 als permeationsverhindernde Sperre für Stoffmischungen mit einem Kohlenwasserstoffanteil von 5 bis 100 Gew.-%.

8. Verwendung des polymeren Stoffes gemäß den Ansprüchen 1 bis 3 zur Herstellung von Folien, Fasern und Formkörpern.

9. Verwendung des polymeren Stoffes gemäß den Ansprüchen 1 bis 3 zur Herstellung von Vorratsbehältern.

10. Verwendung des polymeren Stoffes gemäß den Ansprüchen 1 bis 3 zur Herstellung von Kraftstoffvorratsbehältern.

11. Folien, Fasern und Formkörper aus dem polymeren Stoff gemäß der Ansprüche 1 bis 3.

## Claims

1. A polymeric material consisting of at least two layers which is obtainable by fluorination and comprises at least one fluorine-containing layer and at least one non-fluorine-containing layer, wherein the fluorine-containing layer
is from 4 to 100 µm thick,
contains from 0.1 to 0.76 g of fluorine/g of the fluorine-containing layer and
has from 448 µg to 50 mg of fluorine/cm².

2. A polymeric material consisting of at least two layers, as claimed in claim 1, wherein the non-fluorine-containing layer contains a polyolefin.

3. A polymeric material consisting of at least two layers, as claimed in claim 1 or 2, wherein the non-fluorine-containing layer contains an ethylene polymer.

4. A process for the preparation of a multilayer polymeric material containing at least one fluorine-containing layer, as claimed in any of claims 1 to 3, by fluorinating a polymer, wherein the ambient pressure of the polymer is first reduced to a pressure P1 of from 0.001 to 0.5 kPa, and thereafter fluorination is effected in a second stage with a fluorine-containing gas at a pressure P2 of from 1 to 300 kPa, then in a third stage with a fluorine-containing gas at a pressure P3 of from 10 to 300 kPa and finally in a fourth stage at a pressure P4 of from 10 to 800 kPa , P1 being smaller than P2, P3 and P4 and the fluorination temperature being from 20 to 80°C.

5. A process as claimed in claim 4, wherein the fluorination temperature is from 25 to 45°C.

6. Use of a polymeric material as claimed in any of claims 1 to 3 as a permeation barrier for small molecules.

7. Use of a polymeric material as claimed in any of claims 1 to 3 as a permeation barrier for mixtures having a hydrocarbon content of from 5 to 100% by weight.

8. Use of a polymeric material as claimed in any of claims 1 to 3 for the production of films, fibers and moldings.

9. Use of a polymeric material as claimed in any of claims 1 to 3 for the production of storage containers.

10. Use of a polymeric material as claimed in any of claims 1 to 3 for the production of fuel storage containers.

11. A film, fiber or molding comprising a polymeric material as claimed in any of claims 1 to 3.

## Revendications

1. Matière polymère pouvant être obtenue par fluoration, consistant en au moins deux couches, comprenant au moins une couche contenant du fluor et au moins une couche ne contenant pas de fluor, tandis que la couche contenant du fluor
a une épaisseur de 4 à 100 µm,
contient 0,1 à 0,76 g de fluor/g de la couche contenant du fluor et
est revêtue de 448 µg de fluor/cm² à 50 mg de fluor/cm².

2. Matière polymère consistant en au moins deux couches selon la revendication 1, caractérisée par le fait que la couche ne contenant pas de fluor contient une polyoléfine.

3. Matière polymère consistant en au moins deux couches selon les revendications 1 ou 2, caractérisée par le fait que la couche ne contenant pas de fluor contient un polymère d'éthylène.

4. Procédé pour la préparation d'une matière polymère en plusieurs couches comportant au moins une couche contenant du fluor selon les revendications 1 à 3, par fluoration d'un polymère, caractérisé par le fait qu'on réduit d'abord la pression environnante du polymère à une pression P1 de 0,001 à 0,5 kPa, puis on fluore dans une deuxième étape avec un gaz contenant du fluor sous une pression P2 de 1 à 300 kPa, ensuite dans une troisième étape avec un gaz contenant du fluor sous une pression P3 de 10 à 300 kPa et enfin dans une quatrième étape sous une pression P4 de 10 à 800 kPa, P1 étant plus faible que P2, P3 et P4, et tandis que la température lors de la fluoration se situe entre 20 et 80°C.

5. Procédé selon la revendication 4, caractérisé par le fait que la température lors de la fluoration se situe entre 25 et 45°C.

6. Utilisation de la matière polymère selon les revendications 1 à 3 comme barrage empêchant la perméation pour de petites molécules.

7. Utilisation de la matière polymère selon les revendications 1 à 3 comme barrage empêchant la permation pour des mélanges de substances ayant une fraction hydrocarbonée de 5 à 100 % en poids.

8. Utilisation de la matière polymère selon les revendications 1 à 3 pour la préparation de feuilles, de fibres et de produits conformés.

9. Utilisation de la matière polymère selon les revendications 1 à 3 pour la préparation de réservoirs de stockage.

10. Utilisation de la matière polymère selon les revendications 1 à 3 pour la préparation de réservoirs de stockage de carburant.

11. Feuilles, fibres et produits conformés en matière polymère selon les revendications 1 à 3.
